(19)

Europäisches Patentamt
European Patent Office
Office européen des brevets

(11)  EP 4 455 501 A1

(12)  EUROPEAN PATENT APPLICATION

(43) Date of publication:
**30.10.2024  Bulletin 2024/44**

(21) Application number: **24164154.7**

(22) Date of filing: **18.03.2024**

(51) International Patent Classification (IPC):
*F16C 19/36* (2006.01)    *F16C 33/46* (2006.01)

(52) Cooperative Patent Classification (CPC):
**F16C 33/4635; F16C 19/364; F16C 33/4676;**
F16C 2220/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **20.04.2023   JP 2023068927**

(71) Applicant: **Nabtesco Corporation**
**Tokyo 102-0093 (JP)**

(72) Inventors:
• **Furuta, Kazuya**
  **Tokyo, 102-0093 (JP)**
• **Sakai, Tatsuki**
  **Tokyo, 102-0093 (JP)**

(74) Representative: **Grünecker Patent- und Rechtsanwälte**
**PartG mbB**
**Leopoldstraße 4**
**80802 München (DE)**

(54)  **RETAINER, BEARING, TRANSMISSION AND METHOD OF MANUFACTURING RETAINER**

(57)     A retainer (64) relating to an embodiment of the present invention includes a large-diameter ring (81), a small-diameter ring (82), and a plurality of columns (83) connecting the large- and small-diameter rings (81 and 82). The columns (83) each have a first fall-out preventing portion (88) and a second fall-out preventing portion (89). The first fall-out preventing portion (88) is configured to prevent tapered rollers (63) from falling out of the large- and small-diameter rings (81 and 82) toward the outside in the radial direction, and the second fall-out preventing portion (89) is configured to prevent the tapered rollers (63) from falling out of the large- and small-diameter rings (81 and 82) to the inside in the radial direction. The fall-out preventing portions (88 and 89) are positioned closer to the small-diameter ring (82) than to the large-diameter ring (81).

Fig. 5

EP 4 455 501 A1

## Description

## TECHNICAL FIELD

The present invention relates to a cage, a bearing, a transmission, and a method of manufacturing a cage.

## BACKGROUND

In the conventional art, cages are known to retain rolling elements (rollers) of roller bearings. Cages are produced by injection molding, for example. A retainer retains a plurality of rollers at equal intervals in the circumferential direction. For example, a retainer used in a tapered roller bearing has an annular large-diameter ring, an annular small-diameter ring having a smaller outer diameter than the large-diameter ring, and a plurality of columns extending in the radial direction to connect the large- and small-diameter rings. The columns are arranged at equal intervals in the circumferential direction. The large-diameter ring, small-diameter ring, and columns define pockets, where tapered rollers are housed.

In order to improve the manner of assembling bearings of the type described above, a technology is disclosed where the columns have a conical surface for the purpose of preventing the rolling elements from falling out of the retainer (see, for example, Patent Literature 1). The conical surfaces of the columns are arranged such that one conical surface is positioned on either side defined with respect to the axis of each tapered roller (rolling element). Stated differently, each column has two conical surfaces. The conical surfaces protrude toward the direction in which the column faces the adjacent columns in the circumferential direction. The conical surfaces are in contact with the outer surface of the tapered rollers. This can prevent the tapered rollers from falling out of the cage.

One of the two conical surfaces extends between (i) the middle point between the large- and small-diameter rings and (ii) the large-diameter ring. The other of the two conical surfaces extends between (i) the middle point between the large- and small-diameter rings and (ii) the small-diameter ring. This configuration can prevent the rollers from falling out of the retainer either outwardly or inwardly while allowing the retainer to be shaped by means of injection molding.

## RELEVANT REFERENCE

## LIST OF RELEVANT PATENT LITERATURE

Patent Literature 1: Japanese Patent Application Publication No. 2014-202284

## SUMMARY

According to the conventional technology described above, when the bearing is viewed in the axial direction, the conical surfaces extend over the entire area between the large- and small-diameter rings. In other words, the conical surfaces extend over the entire radial length of the columns. Therefore, the conical surfaces may obstruct the flow of lubricating oil through the bearing from the outside to the inside (hereinafter referred to as "oil flowability"), which could lead to failures of the bearing. This may result in a shorter product lifetime of the bearing.

The present invention provides a cage, a bearing, a transmission, and a method of manufacturing a retainer that can provide an improved manner of assembling and achieve an extended product lifetime by preventing the rolling elements from falling out.

One aspect of the present invention provides a retainer for retaining a plurality of rolling elements of a bearing. The retainer includes an annular large-diameter ring; an annular small-diameter ring having a smaller outer diameter than the large-diameter ring; and a plurality of columns extending in a radial direction of the large- and small-diameter rings to connect the large- and small-diameter rings. The columns are arranged at equal intervals in a circumferential direction and between the rolling elements. The columns each have: a first fall-out preventing portion for preventing the rolling elements from falling out of the large- and small-diameter rings toward a first direction; and a second fall-out preventing portion for preventing the rolling elements from falling out of the large- and small-diameter rings toward a second direction opposite to the first direction. The first and second fall-out preventing portions are positioned closer to one of the large-diameter ring or the small-diameter ring than to another of the large-diameter ring or the small-diameter ring.

In this way, the two fall-out preventing portions can prevent the rolling elements from falling out of the cage, thereby improving the manner of assembling the bearing. The two fall-out preventing portions are positioned closer to one of the large-diameter ring or the small-diameter ring than to the other of the large-diameter ring or the small-diameter ring. Therefore, a fully open space is left between the large-diameter ring and the small-diameter ring on the other side than where the fall-out preventing portions are provided. This can lead to improvement of oil flowability, thereby allowing the bearing to have an extended product lifetime.

In the implementation, the first and second fall-out preventing portions may be positioned closer to the small-diameter ring than to the large-diameter ring.

In the implementation, the rolling elements may include tapered rollers.

In the implementation, a length L1 of the first fall-out preventing portion in a direction orthogonal to the first and second directions may be different from a length L2 of the second fall-out preventing portion in a direction orthogonal to the first and second directions.

In the implementation, the first fall-out preventing portion may be positioned outside in the radial direction. The second fall-out preventing portion may be positioned inside in the radial direction. The length L2 of the second fall-out preventing portion may be measured in a direction in which an axis of the tapered rollers extends. The length L1 of the first fall-out preventing portion may be measured in the direction in which the axis of the tapered rollers extends. The length L2 of the second fall-out preventing portion may be less than the length L1 of the first fall-out preventing portion.

In the implementation, the length L1 of the first fall-out preventing portion may be equal to or greater than 50% of a length L3 indicating a distance between the large- and small-diameter rings.

In the implementation, the columns each have: an outer surface located outside in the radial direction; and an inner surface located inside in the radial direction. The outer surface is a flat surface extending from the small-diameter ring to the large-diameter ring. The inner surface has: a first flat surface extending from the small-diameter ring toward the large-diameter ring in a direction in which the outer surface extends; an inclined surface extending obliquely from an end of the first flat surface facing the large-diameter ring toward the outer surface; and a second flat surface extending from an end of the inclined surface facing the large-diameter ring to the large-diameter ring in the direction in which the outer surface extends. A relation of $T1 \geq T2$ may be satisfied, where T1 represents a thickness in the radial direction of an end of the large-diameter ring that faces away from the small-diameter ring and T2 represents a thickness indicating a distance between the outer surface and the second flat surface.

In the implementation, the large-diameter ring, the small-diameter ring and the columns may be made from a resin and shaped by two separable molds. The first and second fall-out preventing portions may be both located on one of sides defined with respect to a parting line for the two separable molds.

In the implementation, a first side surface of the first fall-out preventing portion that faces the large-diameter ring may be located on a same straight line as a second side surface of the large-diameter ring that faces inside in the radial direction. The first side surface, the second side surface and a portion of the outer surface of the each column that is positioned on the small-diameter ring side with respect to the first side surface may be arranged along the parting line.

Another aspect of the present invention provides a bearing including an outer race; an inner race located inside the outer race in a radial direction; a plurality of rolling elements rollably housed between the inner race and the outer race; and a retainer retaining the plurality of rolling elements. The retainer includes: an annular large-diameter ring; an annular small-diameter ring having a smaller outer diameter than the large-diameter ring; and a plurality of columns connecting the large- and small-diameter rings, the columns being arranged at equal intervals in a circumferential direction and between the rolling elements. The columns each have: a first fall-out preventing portion for preventing the rolling elements from falling out of the large- and small-diameter rings toward a first direction; and a second fall-out preventing portion for preventing the rolling elements from falling out of the large- and small-diameter rings toward a second direction opposite to the first direction. The first and second fall-out preventing portions are positioned closer to one of the large-diameter ring or the small-diameter ring than to another of the large-diameter ring or the small-diameter ring.

In this way, the two types of fall-out preventing portions can prevent the rolling elements from falling out of the cage, thereby improving the manner of assembling the bearing. The two types of fall-out preventing portions are positioned closer to one of the large-diameter ring or the small-diameter ring than to the other of the large-diameter ring or the small-diameter ring. Therefore, a fully open space is left between the large-diameter ring and the small-diameter ring on the other side than where the fall-out preventing portions are provided. This can lead to improvement of oil flowability of the bearing, thereby allowing the bearing to have an extended product lifetime.

Another aspect of the present invention provides a transmission including an input part for receiving an input rotational force; a speed changing unit for changing a speed of rotation of the input part; a first output part and a second output part to which the rotation of the input part is transmitted via the speed changing unit, the first and second output parts being configured to rotate relative to each other; and a bearing supporting the first and second output parts such that the first and second output parts are rotatable relative to each other. The bearing includes: an outer race; an inner race located inside the outer race in a radial direction; a plurality of rolling elements reliably housed between the inner race and the outer race; and a retainer retaining the plurality of rolling elements. The retainer includes: an annular large-diameter ring; an annular small-diameter ring having a smaller outer diameter than the large-diameter ring; and a plurality of columns connecting the large- and small-diameter rings, the columns being arranged at equal intervals in a circumferential direction and between the rolling elements. The columns each have: a first fall-out preventing portion for preventing the rolling elements from falling out of the large- and small-diameter rings toward a first direction; and a second fall-out preventing portion for preventing the rolling elements from falling out of the large- and small-diameter rings toward a second direction opposite to the first direction. The first and second fall-out preventing portions are positioned closer to one of the large-diameter ring or the small-diameter ring than to another of the large-diameter ring or the small-diameter ring.

In this manner, the bearing can be assembled in an improved manner, so that the transmission can be also assembled in an improved manner. As the bearing can achieve improved oil flowability, thereby allowing the transmission to have an extended product lifetime.

Another aspect of the present invention provides a method of manufacturing a retainer for retaining a plurality of rolling elements of a bearing. The retainer has a first fall-out preventing portion for preventing the rolling elements from falling out of the retainer toward a first direction and a second fall-out preventing portion for preventing the rolling elements from falling out of the retainer toward a second direction opposite to the first direction, the first fall-out preventing portion being positioned on one of sides defined relative to the rolling element and the second fall-out preventing portion being positioned on said one of sides defined relative to the rolling elements. The method includes steps of: making the retainer from a resin by means of injection molding using two molds; and separating the two molds from each other at a parting line. One of the two molds is used to make the first and second fall-out preventing portions.

This method can produce a retainer having rolling elements in such a manner that the rolling elements can be prevented from falling out. Therefore, the method can contribute to improve the manner of assembling a bearing. Since the first and second fall-out preventing portions are positioned on the same side defined relative to the rolling elements, the bearing can accomplish improved oil flowability and an extended product lifetime. Since the two fall-out preventing portions are collectively shaped using a single mold, the molding accuracy of the fall-out preventing portions can be readily adjusted, and the retainer can be manufactured at a reduced cost.

## ADVANTAGEOUS EFFECTS

The present invention can provide an improved manner of assembling a bearing and achieve an extended product lifetime by preventing the rolling elements from falling out.

## BRIEF DESCRIPTION OF THE DRAWINGS

Fig. 1 is a sectional view of a speed reducer according to an embodiment of the present invention.
Fig. 2 is an enlarged view of the part II of Fig. 1.
Fig. 3 is a side view of a tapered roller according to the embodiment of the invention.
Fig. 4 is a side view of a retainer according to the embodiment of the present invention.
Fig. 5 is a perspective view of part of the retainer according to the embodiment of the present invention as viewed from outside.
Fig. 6 is a perspective view of part of the retainer according to the embodiment of the present invention as viewed from inside.
Fig. 7 is a sectional view along the line VII-VII in Fig.

4.

## DESCRIPTION OF THE PREFERRED EMBODIMENTS

The embodiments of the present invention will be hereinafter described with reference to the drawings.

<Speed Reducer>

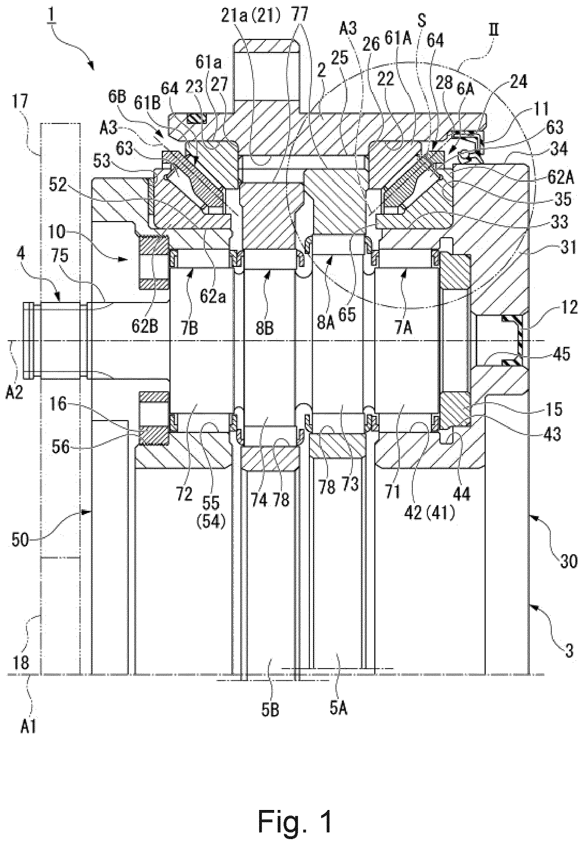

Fig. 1 is a sectional view of a speed reducer 1. Fig. 1 only presents one of the halves (the upper half) of the speed reducer 1 divided by an axis of rotation A1 of a carrier 3. As shown in Fig. 1, the speed reducer 1 includes a circular cylindrical outer tube 2, a carrier 3 rotatably supported on the outer tube 2 via two main bearings 6A and 6B (a first main bearing 6A and a second main bearing 6B) and a reduction unit 10 provided on the carrier 3. In the following description, the term "axial direction" refers to the direction parallel to the axis of rotation A1. The term "circumferential direction" refers to the rotational direction of the carrier 3. The term "radial direction" refers to the radial direction of the carrier 3, which is orthogonal to the axial and circumferential directions. In the following description, the expression "inside in the axial direction" refers to the side closer to the center of the outer tube 2 in the axial direction, and the expression "outside in the axial direction" refers to the side facing away from the center of the outer tube 2 in the axial direction.

<Outer Tube>

The central axis of the outer tube 2 coincides with the axis of rotation A1. The inner circumferential surface of the outer tube 2 has an internal tooth portion 21 in its middle portion in the axial direction. The part indicated by the term "middle portion" includes the middle between the opposite ends of the outer tube 2 in the axial direction and also the vicinity of the middle. The internal tooth portion 21 has a plurality of pin grooves 21a. The pin grooves 21a extend in the axial direction and are provided at equal intervals in the circumferential direction. The pin grooves 21a respectively receive internal tooth pins 25 therein. The internal tooth pins 25 are shaped like a circular column. The internal tooth pins 25 serve as internal teeth and constitute part of the reduction unit 10.

The inner circumferential surface of the outer tube 2 also has first and second outer race holding portions 22 and 23 sandwiching the internal tooth portion 21 respectively via step surfaces 26 and 27. The first outer race holding portion 22 fittedly receives an outer race 61A of the first main bearing 6A of the two main bearings 6A and 6B. The second outer race holding portion 23 fittedly receives an outer race 61B of the second main bearing 6B of the two main bearings 6A and 6B. The outer races 61A and 61B respectively butt up against the corresponding step surfaces 26 and 27, which can rightly position the outer races 61A and 61B in the axial direction.

The second outer race holding portion 23 is positioned at one of the ends of the outer tube 2 in the axial direction. The inner circumferential surface of the outer tube 2 has a seal portion 24 continuous from the first outer race holding portion 22 via a step surface 28. The seal portion 24 and the internal tooth portion 21 sandwich the first outer race holding portion 22. The seal portion 24 is positioned at the other end of the outer tube 2 in the axial direction. The seal portion 24 has a greater inner diameter than the first outer race holding portion 22. The seal portion 24 fittedly receives an oil seal 11. The oil seal 11 provides sealing between the outer tube 2 and the carrier 3.

<Carrier>

The carrier 3 is constituted by first and second carrier blocks 30 and 50, so that it can be divided into portions arranged next to each other in the axial direction. The first carrier block 30 is positioned near the first main bearing 6A. The first carrier block 30 includes a base 31 and a plurality of support columns (not shown). The base 31 has a disk-like shape, and the plurality of support columns extend from the base 31 toward the second carrier block 50. A portion of the outer circumferential surface of the base 31 that faces outward in the axial direction (that faces away from the second carrier block 50) constitutes a seal portion 34. The seal portion 34 fittedly receives the oil seal 11. In this way, the oil seal 11 provides sealing between the outer tube 2 and the carrier 3.

The base 31 has a first inner race holding portion 33 continuous from the seal portion 34 via a step surface 35. The first inner race holding portion 33 is positioned inside the seal portion 34 in the axial direction. The first inner race holding portion 33 has a smaller outer diameter than the seal portion 34. The first inner race holding portion 33 fittedly receives an inner race 62A of the first main bearing 6A. In this manner, the first carrier block 30 is rotatably supported by the outer tube 2. The inner race 62A butts up against the step surface 35, which can rightly position the inner race 62A in the axial direction.

The base 31 has a plurality of first shaft mounting holes 41, which are arranged inside the first inner race holding portion 33 in the radial direction. The first shaft mounting holes 41 extend through the base 31 in the axial direction. The first shaft mounting holes 41 are arranged at equal intervals in the circumferential direction. The first shaft mounting holes 41 receive therein crankshafts 4 constituting part of the reduction unit 10. The crankshafts 4 will be described below.

Each first shaft mounting hole 41 is divided into a first shaft supporting portion 42, an increased diameter portion 44, a bush holding portion 43 and a communicating portion 45 that are positioned in the stated order from the inside in the axial direction. The increased diameter portion 44 has a greater inner diameter than the first shaft supporting portion 42. The bush holding portion 43 has a smaller inner diameter than the first shaft holding portion 42. The communicating portion 45 has a smaller inner diameter than the bush holding portion 43.

The bush holding portion 43 fittedly receives a bush 15. The bush 15 restricts the crankshaft 4 (described below) from moving in the axial direction. The first shaft supporting portion 42 fittedly receives a first crank bearing 7A. The first crank bearing 7A can help the crankshafts 4 (described below) being rotatably supported by the first carrier block 30. The communicating portion 45 has a seal cap 12 mounted from the outside in the axial direction.

Although not shown, the support columns are each positioned between adjacent two of the first shaft mounting holes 41 in the circumferential direction. The support columns each have an end surface facing the second carrier block 50, which butts up against the second carrier block 50.

The second carrier block 50 is positioned near the second main bearing 6B. The second carrier block 50 is secured by bolts (not shown) while butting up against the support columns (not shown) of the first carrier block 30. In other words, the second carrier block 50 is spaced away from the first carrier block 30 with a distance equal to the height of the support columns in the axial direction being provided therebetween. The first and second carrier blocks 30 and 50 are integrated together.

The second carrier block 50 is shaped like a circular plate. A portion of the outer surface of the second carrier block 50 that faces inward in the axial direction (that faces the first carrier block 30) has a second inner race holding portion 52 continuous from a step surface 53. The second inner race holding portion 52 has a smaller outer diameter than the axially outer portion of the second carrier block 50. The second inner race holding portion 52 fittedly receives an inner race 62B of the second main bearing 6B. In this manner, the second carrier block 50 is rotatably supported by the outer tube 2. The inner race 62B is rightly positioned in the axial direction by the step surface 53.

The second carrier block 50 has a plurality of second shaft mounting holes 54, which are arranged inside the second inner race holding portion 52 in the radial direction. The number of second shaft mounting holes 54 is the same as the number of first shaft mounting holes 41. The second shaft mounting holes 54 extend through the second carrier block 50 in the axial direction. Each of the second shaft mounting holes 54 is coaxially arranged with a corresponding one of the first shaft mounting holes 41. The second shaft mounting holes 54 receive therein the crankshafts 4, which will be described below. Each second shaft mounting hole 54 is divided into a second shaft supporting portion 55 and an internally threaded portion 56 that are positioned in the stated order from the inside in the axial direction.

The effective diameter of the internally threaded portion 56 is greater than the inner diameter of the second shaft supporting portion 55. The second shaft supporting portion 55 fittedly receives a second crank bearing 7B. The second crank bearing 7B can help the crankshafts 4 (described below) being rotatably supported by the second carrier block 50. An annular fall-out preventing bolt 16 is screwed into the internally threaded portion 56. The fall-out preventing bolt 16 prevents the crankshafts 4 from falling out of the second haft mounting holes 54.

<Reduction Unit>

The reduction unit 10 is an eccentric oscillation speed reducing mechanism. More specifically, the reduction unit 10 is mainly constituted by the internal tooth pins 25, the crankshafts 4 inserted through the shaft mounting holes 41 and 54, and two oscillating gears 5A and 5B (a first oscillating gear 5A and a second oscillating gear 5B) rotatably mounted on the crankshafts 4. The crankshafts 4 each have a first journal 71 having the first crank bearing 7A fitted thereon, a second journal 72 having the second crank bearing 7B fitted thereon, two eccentric portions 73 and 74 (a first eccentric portion 73 and a second eccentric portion 74) positioned inside the journals 71 and 72 in the axial direction, and a reduced diameter portion 75 protruding from the second journal 72 outward in the axial direction.

The bush 15 is provided outside the first journal 71 in the axial direction. The fall-out preventing bolt 16 is provided outside the second journal 72 in the axial direction. This results in restricting the crankshaft 4 from moving in the axial direction relative to the carrier 3. Among the two eccentric portions 73 and 74, the first eccentric portion 73 is arranged next to the first journal 71. Among the two eccentric portions 73 and 74, the second eccentric portion 74 is arranged next to the second journal 72. The centers of the eccentric portions 73 and 74 are shifted from the axis of rotation A2 of the crankshaft 4. The axis of rotation A2 is parallel to the axis of rotation A1 (the axial direction). The eccentric portions 73 and 74 are disposed so as to have a phase difference of a predetermined angle (180 ° in the embodiment) from each other.

The reduced diameter portion 75 extends outward in the axial direction beyond the second carrier block 50 through the fall-out preventing bolt 16. A spur gear 17 is mounted at, for example, the outer portion of the reduced diameter portion 75 beyond the second carrier block 50. The spur gear 17 meshes with an input gear 18 that receives rotation input from an external motor, which is not shown. This allows the rotational force provided from the external motor (the rotational force of the input gear 18) to be transmitted to the crankshaft 4 via the spur gear 17.

The two oscillating gears 5A and 5B are shaped like a circular plate so that they can be accommodated between the second carrier block 50 and the base 31 of the first carrier block 30. The two oscillating gears 5A and 5B are disposed next to each other in the axial direction between the second carrier block 50 and the base 31. Among the two oscillating gears 5A and 5B, the first oscillating gear 5A is positioned closer to the base 31. Among the two oscillating gears 5A and 5B, the second oscillating gear 5B is positioned closer to the second carrier block 50.

The two oscillating gears 5A and 5B each have external teeth 77 on the outer periphery, which mesh with the internal tooth pins 25 provided on the outer tube 2. The two oscillating gears 5A and 5B each have a plurality of shaft insertion holes 78 through which the crankshafts 4 are respectively and individually inserted. In the shaft insertion holes 78 of the first oscillating gear 5A, the first eccentric portions 73 are provided via first eccentric bearings 8A. In the shaft insertion holes 78 of the second oscillating gear 5B, the second eccentric portions 74 are provided via second eccentric bearings 8B.

With the above-described arrangements, as the crankshafts 4 rotate and the first eccentric portions 73 eccentrically rotate, the eccentric rotation of the first eccentric portions 73 results in the first oscillating gear 5A oscillatorily rotating about the axis of rotation A2 while meshing with some of the internal tooth pins 25. As the crankshafts 4 rotate and the second eccentric portions 74 eccentrically rotate, the eccentric rotation of the second eccentric portions 74 results in the second oscillating gear 5B oscillatorily rotating about the axis of rotation A2 while meshing with some of the internal tooth pins 25. As a result, the crankshafts 4 supported by the first and second oscillating gears 5A and 5B orbit around the axis of rotation A1, and the carrier 3 supporting the crankshafts 4 rotates about the axis of rotation A1.

<Main Bearing>

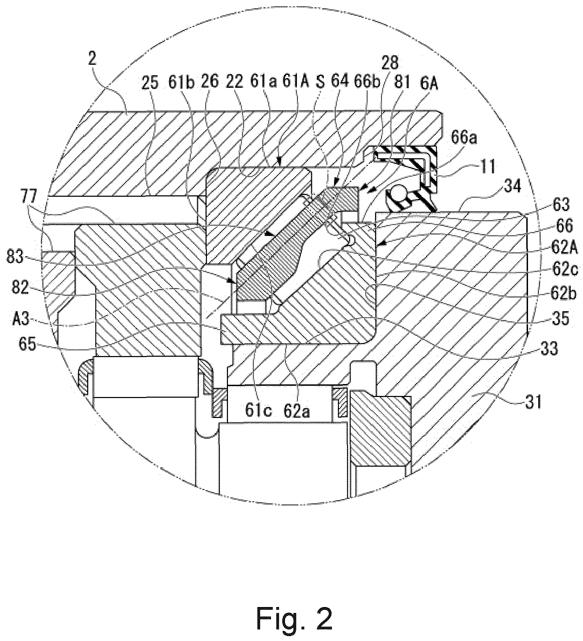

The following now describes the main bearings 6A and 6B. The two main bearings 6A and 6B are configured in the same manner. Therefore, the following description only mentions the first main bearing 6A of the two main bearings 6A and 6B. The second main bearing 6B is not described here. Fig. 2 is an enlarged view of the part II of Fig. 1. As shown in Fig. 2, the first main bearing 6A is a tapered roller bearing. The first main bearing 6A includes an outer race 61A fitted on the outer tube 2, an inner race 62A fitted onto the carrier 3, a plurality of tapered rollers 63 housed between the outer and inner races 61A and 62A, and a resin retainer 64 housed between the outer and inner races 61A and 62A and retaining the tapered rollers 63. In Fig. 1, among the components of the second main bearing 6B, the tapered rollers and retainer are identified by the same reference numerals as those assigned to the corresponding components of the first main bearing 6A.

<Outer Race>

The outer race 61A has a triangular cross-section when cut along the axial direction. More specifically, the outer race 61A has an outer circumferential surface 61a butting up against the first outer race holding portion 22 of the outer tube 2, an end surface 61b butting up against the step surface 26, and an outer rolling surface 61c facing inward in the radial direction. The outer rolling surface 61c is inclined with respect to the axial direction such that its axially inner portion is positioned on a more inner side in the radial direction than is its axially outer portion.

<Inner Race>

The inner race 62A has a triangular cross-section when cut along the axial direction. More specifically, the inner race 62A has an inner circumferential surface 62a butting up against the first inner race holding portion 33 of the first carrier block 30, an end surface 62b butting up against the step surface 35, and an inner rolling surface 62c facing outward in the radial direction. The inner rolling surface 62c is inclined with respect to the axial direction such that its axially inner portion is positioned on a more inner side in the radial direction than is its axially outer portion.

The inner race 62A has a retainer placement wall 65 integrated together, which is shaped like a circular cylinder. The retainer placement wall 65 protrudes from the axially inner portion of the inner rolling surface 62c inwardly in the axial direction. On the retainer placement wall 65, part of the retainer 64 is placed. The inner race 62A further has an annular restriction wall 66 integrated together. The restriction wall 66 projects from the axially outer portion of the inner rolling surface 62c outwardly in the radial direction. The restriction wall 66 can rightly position the tapered rollers 63 in the axial direction.

The outer peripheral surface 66a of the restriction wall 66 extends along the axial direction. The restriction wall 66 has a restriction surface 66b rising from the axially outer portion of the inner rolling surface 62c. The restriction surface 66b is orthogonal to the inner rolling surface 62c. Since the outer peripheral surface 66a and restriction surface 66b are configured in this way, the restriction wall 66 is inwardly tapered in the axial direction. As the end surface of the tapered rollers 63 in the axial direction butts up against the restriction surface 66b, the tapered rollers 63 are rightly positioned.

<Tapered Roller>

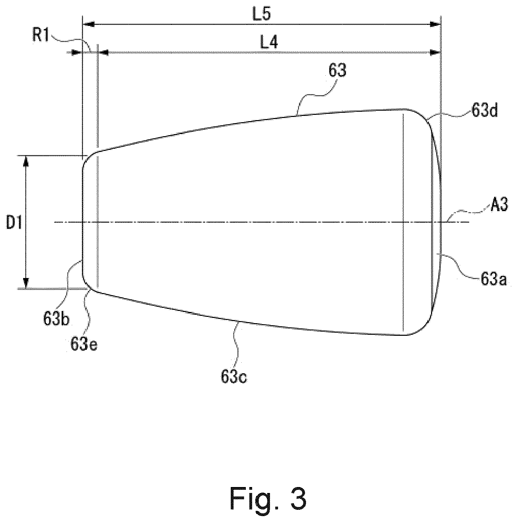

Fig. 3 is a side view of the tapered rollers 63. As shown in Figs. 2 and 3, the tapered rollers 63 are shaped like a circular truncated cone centered on an axis of roller A3. The tapered rollers 63 each have a large-diameter surface 63a, a small-diameter surface 63b, and a taper surface 63c connecting the large- and small-diameter surfaces 63a and 63b. The taper surface 63c is inclined with respect to the axis of roller A3 such that the distance between the taper surface 63c and the axis of roller A3 is greater at the large-diameter surface 63a than at the small-diameter surface 63b. A large-diameter-side rounded portion 63d is formed where the large-diameter surface 63a and the taper surface 63c meets. A small-diameter-side rounded portion 63e is formed where the small-diameter surface 63b and the taper surface 63c meets.

The tapered rollers 63 are each inclined with respect to the axial and radial directions such that the axially inner portion of the axis of roller A3 is positioned on a more inner side in the radial direction than is the axially outer portion of the axis of roller A3. The tapered rollers 63 are arranged such that its small-diameter surface 63b face inward in the radial direction. The tapered rollers 63 orbit around the axis of rotation A1 while rolling on the outer and inner rolling surfaces 61c and 62c. The tapered rollers 63 are arranged at equal intervals in the circumferential direction by the retainer 64.

<Cage>

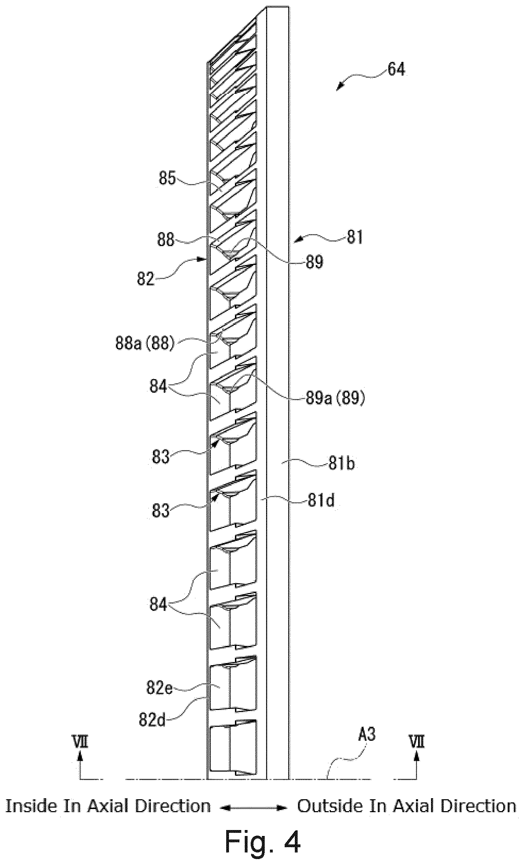

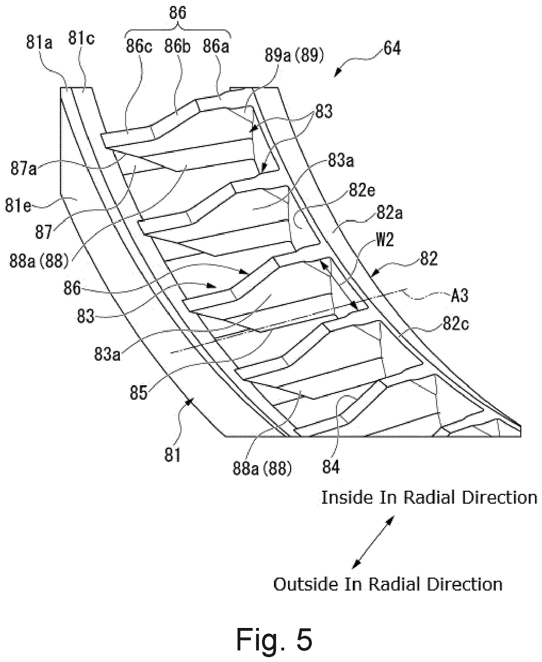

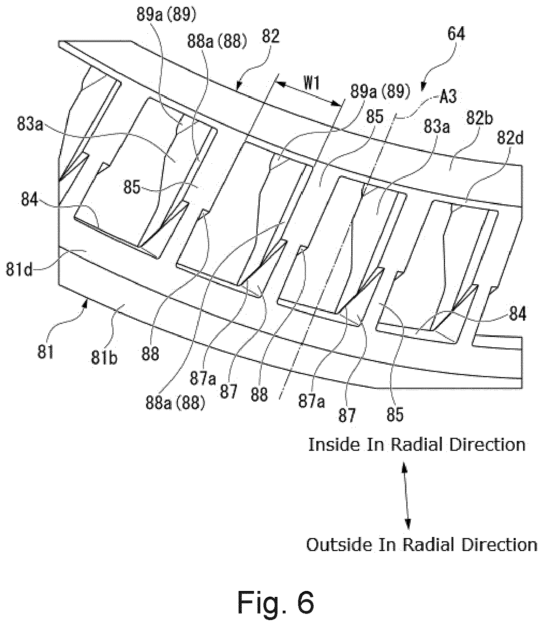

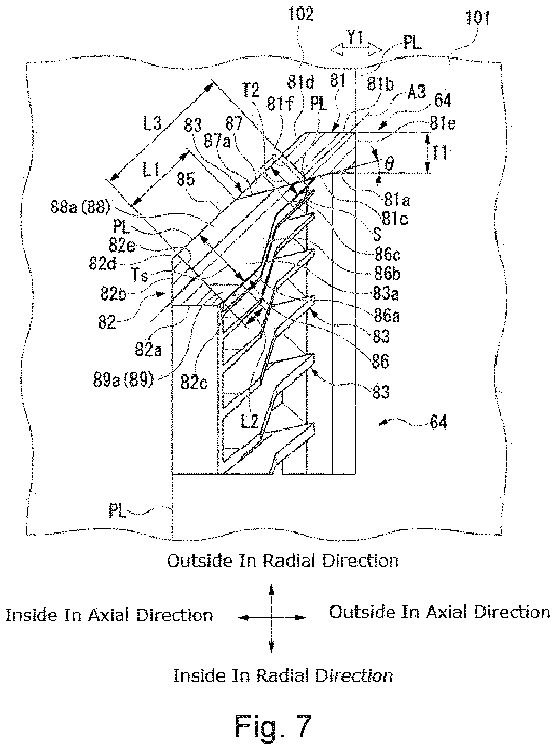

Fig. 4 is a side view of the retainer 64. Fig. 5 is a perspective view of part of the retainer 64 as viewed from outside. Fig. 6 is a perspective view of part of the retainer 64 as viewed from outside. Fig. 7 is a sectional view along the line VII-VII in Fig. 4. As shown in Figs. 1, 2, and 4 to 7, the retainer 64 has an annular large-diameter ring 81, an annular small-diameter ring 82 arranged inside the large-diameter ring 81 in the radial direction, and a plurality of columns 83 connecting the large- and small-diameter rings 81 and 82. The large-diameter ring 81, small-diameter ring 82 and columns 83 are integrated together.

The large-diameter ring 81 is arranged at a distance and outside the outer peripheral surface 66a of the restriction wall 66 of the inner race 62A in the radial direction. The large-diameter ring 81 has a large-diameter inner surface 81a (an example of a second side surface recited in the claims), a large-diameter outer surface 81b, an inclined inner surface 81c (an example of the second side surface recited in the claims), an inclined outer surface 81d, an axially outer end surface 81e, and an axially inner end surface 81f. The large-diameter inner surface 81a faces in the radial direction the outer peripheral surface 66a of the restriction wall 66. The large-diameter outer surface 81b is positioned outside in the radial direction the large-diameter inner surface 81a. The inclined inner surface 81c extends from the large-diameter inner surface 81a inward in the axial direction. The inclined outer surface 81d extends from the large-diameter outer surface 81b inward in the axial direction. The axially outer end surface 81e connects the outer end of the large-diameter inner surface 81a and the outer end of the large-diameter outer surface 81b. The axially inner end surface 81f connects the inner end of the inclined inner surface 81c and the inner end of the inclined outer surface 81d.

The large-diameter inner and outer surfaces 81a and 81b are parallel to the outer peripheral surface 66a of the restriction wall 66. The inclined inner and outer surfaces 81c and 81d are inclined with respect to the axial direction such that their axially inner portion is positioned on a more inner side in the radial direction than is their axially outer portion. The inclined outer surface 81d is parallel to the axis of roller A3. The axially outer end surface 81e is parallel to the radial direction. The axially inner end surface 81f is formed such that it is orthogonal to the axis of roller A3.

The small-diameter ring 82 is arranged at a distance and outside the outer peripheral surface of the retainer placement wall 65 of the inner race 62A in the radial direction. The small-diameter ring 82 has a small-diameter inner surface 82a, an axially inner end surface 82b, an inclined inner surface 82c, an inclined outer surface 82d, and an axially outer end surface 82e. The small-diameter inner surface 82a faces in the radial direction the outer peripheral surface of the retainer placement wall 65. The axially inner end surface 82b extends from the axially inner end of the small-diameter inner surface 82a outward in the axial direction. The inclined inner surface 82c extends from the axially outer end of the small-diameter inner surface 82a outward in the axial direction. The inclined outer surface 82d extends from the radially outer end of the axially inner end surface 82b outward in the axial direction. The axially outer end surface 82e connects the outer end of the inclined inner surface 82c and the outer end of the inclined outer surface 82d.

The small-diameter inner surface 82a is parallel to the outer peripheral surface of the retainer placement wall 65 and the axial direction. The axially inner end surface 82b is parallel to the radial direction. The inclined inner and outer surfaces 82c and 82d are inclined with respect to the axial direction such that their axially outer portion is positioned on a more outer side in the radial direction than is their axially inner portion. The inclined inner and outer surfaces 82c and 82d are parallel to each other. The axially outer end surface 82e is orthogonal to the axis of roller A3. This means that the axially outer end surface 82e is parallel to the axially inner end surface 81f of the large-diameter ring 81. The axially outer and inner end surfaces 82e and 81f face each other in the direction along the axis of roller A3.

The columns 83 extend along the radial direction and arranged at equal intervals in the circumferential direction. The columns 83, large-diameter ring 81 and small-diameter ring 82 define pockets 84, where the tapered rollers 63 are rollably housed. In other words, the columns 83 are each positioned between adjacent two of the tapered rollers 63 in the circumferential direction.

The columns 83 are shaped like a plate. The columns 83 are arranged such that its plate thickness direction coincides with the circumferential direction. In the following description, the term "plate thickness" refers to the thickness of the columns 83 in the circumferential direction. The columns 83 have a rectangular shape long in the direction extending along the axis of roller A3 when viewed in the circumferential direction. The columns 83 each have opposite ends in the direction extending along the axis of roller A3, which are respectively connected to the axially inner end surface 81f of the large-diameter ring 81 and the axially outer end surface 82e of the small-diameter ring 82. Each column 83 has an outer surface 85 that is positioned outside in the radial direction. The outer surface 85 is a flat surface parallel to the axis of roller A3. Each column 83 has an inner surface 86 that is positioned inside in the radial direction. The inner surface 86 has a first flat surface 86a, an inclined surface 86b, and a second flat surface 86c, which are arranged in the stated order in the direction from the small-diameter ring 82 to the large-diameter ring 81.

The first flat surface 86a extends along the axis of roller A3 (along the direction in which the outer surface 85 extends) from the small-diameter ring 82 toward the large-diameter ring 81. The inclined surface 86b extends obliquely from the end of the first flat surface 86a facing the large-diameter ring 81 toward the outer surface 85. The second flat surface 86c extends from the end of the inclined surface 86b facing the large-diameter ring 81 to the large-diameter ring 81. The second flat surface 86c is parallel to the first flat surface 86a, the axis of roller A3 and the outer surface 85. The end of the second flat surface 86c facing the large-diameter ring 81 extends over the inclined inner surface 81c. In the following description, in relation to the columns 83, the term "shorter axis direction" refers to the direction orthogonal to the axis of roller A3.

The columns 83 each have a thin portion 87 shaped like a triangle when seen in the circumferential direction at a portion thereof close to the large-diameter ring 81. The columns 83 each have side surfaces 83a facing each other in the circumferential direction (hereinafter, referred to as the circumferential side surfaces 83a), and the circumferential side surfaces 83a have a step 87a. Thus, the thin portion 87 has a smaller plate thickness than defined between the circumferential side surfaces 83a. The step 87a extends from the inclined inner surface 81c of the large-diameter ring 81 to the outer surface 85 along the inclined inner surface 81c.

The columns 83 each have a first fall-out preventing portion 88 in its portion near the outer surface 85. The first fall-out preventing portion 88 is configured to prevent the tapered roller 63 from falling out of the retainer 64 in the direction from the inner surface 86 to the outer surface 85 (in a first direction recited in the claims). The first fall-out preventing portion 88 protrudes from each circumferential side surface 83a. The first fall-out preventing portion 88 extends from the step 87a to the small-diameter ring 82. In other words, the step 87a is equivalent to a first side surface of the first fall-out preventing portion 88 facing the large-diameter ring 81, which is recited in the claims. The first side surface is positioned on the same straight line as the inclined inner surface 81c of the large-diameter ring 81 (a second side surface) (see Fig. 7).

The first fall-out preventing portion 88 extends from a portion that is slightly shifted toward the outer surface 85 from the middle portion in the shorter axis direction to the outer surface 85 and is wider in a portion next to the outer surface 85. Stated differently, the plate thickness of the first fall-out preventing portion 88 gradually increases toward the outer surface 85. Therefore, the first fall-out preventing portion 88 has an inclined surface 88a that is oblique with respect to the circumferential side surface 83a of the column 83.

The columns 83 each have a second fall-out preventing portion 89 near the inner surface 86. The second fall-out preventing portion 89 is configured to prevent the tapered rollers 63 from falling out of the retainer 64 in the direction from the outer surface 85 to the inner surface 86 (in a second direction recited in the claims). The second fall-out preventing portion 89 protrudes from each circumferential side surface 83a. The second fall-out preventing portion 89 is provided where the first flat surface 86a of the inner surface 86 meets the axially outer end surface 82e of the small-diameter ring 82. The second fall-out preventing portion 89 has a triangular shape when viewed in the circumferential direction. The plate thickness of the second fall-out preventing portion 89 gradually increases toward the first flat surface 86a and the axially outer end surface 82e. Therefore, the second fall-out preventing portion 89 has an inclined surface 89a that is oblique with respect to the circumferential side surface 83a.

As described above, the first and second fall-out preventing portions 88 and 89 are positioned closer to the small-diameter ring 82 than to the large-diameter ring 81.

<Dimensions of Respective Portions of Cage>

The following now describes how the dimensions of the respective portions of the retainer 64 are determined relative to each other.

(1) The length L2 of the second fall-out preventing portion 89 in the direction extending along the axis of roller A3 (see Fig. 7) is less than the length L1 of the first fall-out preventing portion 88 in the direction extending along the axis of roller A3 (see Fig. 7). The length L2 of the second fall-out preventing portion 89 denotes the length of the longest portion of the second fall-out preventing portion 89 in the direction extending along the axis of roller A3. Specifically, the length L2 of the second fall-out preventing portion 89 denotes the length of the end of the second fall-out preventing portion 89 on the first flat surface 86a side.

The length L1 of the first fall-out preventing portion 88 denotes the length of the shortest portion of the first fall-out preventing portion 88 in the direction extending along the axis of roller A3. Specifically, the length L1 of the first fall-out preventing portion 88 denotes the length of the end of the first fall-out preventing portion 88 on the outer surface 85 side. With these configurations, when the length of the second fall-out preventing portion 89 is compared against the length of the first fall-out preventing portion 88 in the axis A3 direction, the second fall-out preventing portion 89 is always shorter at any positions.

(2) The length L1 of the first fall-out preventing portion 88 is equal to or greater than 50% of the length L3 indicating the distance between the large-diameter ring 81 and the small-diameter ring 82 (see Fig. 7). The length L3 of the distance between the large-diameter ring 81 and the small-diameter ring 82 can be also represented as the length of the distance between the axially inner end surface 81f of the large-diameter ring 81 and the axially outer end surface 82e of the small-diameter ring 82.

(3) The overlap allowance between the width W1 indicating the distance between adjacent two of the first fall-out preventing portions 88 in the circumferential direction (see Fig. 6) and the diameter D1 of the small-diameter surface 63b of the tapered rollers 63 (see Fig. 3) falls within the range of 5% to 15%. The diameter D1 of the small-diameter surface 63b represents the outer diameter of the largest portion of the small-diameter-side rounded portion 63e.

(4) The thickness Ts defined between the outer surface 85 of the column 83 and the first flat surface 86a (see Fig. 7) is 55% to 65% of the diameter D1.

(5) The thickness T2 defined between the outer surface 85 of the column 83 and the second flat surface 86c (see Fig. 7) is 55% to 65% of the thickness Ts.

(6) The thickness T1 of the axially outer end surface 81e of the large-diameter ring 81 in the radial direction (see Fig. 7) and the thickness T2 satisfy the following expression.

$$T1 \geq T2 \cdots (1)$$

To satisfy the expression (1), the angle θ between the large-diameter inner surface 81a of the large-diameter ring 81 and the inclined inner surface 81c (see Fig. 7) is 5° to 15°, for example.

(7) The result of subtracting the length L2 from the length L3 is 93% to 99% of the length L4 of the tapered roller 63 in the direction extending along the axis of roller A3 (see Fig. 3). The length L4 is equal to the result of subtracting the radius R1 of the small-diameter-side rounded portion 63e from the entire length L5 of the tapered roller 63 in the direction extending along the axis of roller A3.

(8) The width W2 indicating the distance between adjacent two of the second fall-out preventing portions 89 in the circumferential direction (see Fig. 5) is 92% to 97% of the diameter D1.

<Method of Manufacturing Cage>

The following now describes the method of manufacturing the retainer 64. As shown in Fig. 7, the retainer 64 is injection molded using two separable molds 101 and 102 (a first mold 101 and a second mold 102). The parting line PL of the two molds 101 and 102 extends along the axially outer end surface 81e, large-diameter inner surface 81a and inclined inner surface 81c of the large-diameter ring 81, the step 87a and outer surface 85 of the columns 83, the inclined outer surface 82d and axially inner end surface 82b of the small-diameter ring 82.

A direction Y1 indicates the direction in which the two molds 101 and 102 can be separated from each other and denotes the left-right direction in Fig. 7. Since the parting line PL extends in the above-described manner, the fall-out preventing portions 88 and 89 are made in the first mold 101. In other words, the fall-out preventing portions 88 and 89 are arranged on one of the sides defined with respect to the parting line PL of the molds 101 and 102.

<Method of Assembling Bearing>

The following now describes the method of assembling the first main bearing 6A. To begin with, the tapered rollers 63 are combined with the retainer 64. Here, the tapered rollers 63 are combined from the side where the second fall-out preventing portion 89 is positioned, that is to say, from the inside in the radial direction. More specifically, the portion of each tapered roller 63 including the small-diameter surface 63b is inserted between the second and first fall-out preventing portions 89 and 88 of the retainer 64 from the inside in the radial direction, after which the portion of each tapered roller 63 including the large-diameter surface 63a is housed in the pocket 84.

The first step of combining the portion of the tapered roller 63 including the small-diameter surface 63b with the retainer 64 may involve pushing the portion of the tapered roller 63 including the small-diameter surface 63b into the second fall-out preventing portion 89 from the inside in the radial direction. Here, the portion of the tapered roller 63 including the small-diameter surface 63b pushes and expands the second fall-out preventing portion 89 while the tapered roller 63 is being combined. The small-diameter surface 63b of the tapered roller 63 has a smaller diameter than the large-diameter surface 63a. Additionally, the second fall-out preventing portion 89 is sufficiently smaller than the first fall-out preventing portion 88. For these reasons, no excessive pressing force is required to combine the tapered roller 63 with the retainer 64.

If the tapered roller 63 is combined with the retainer 64 from the inside in the radial direction, the tapered surface 63c of the tapered roller 63 touches the inclined surface 88a of the first fall-out preventing portion 88. This can result in preventing the tapered roller 63 from falling out of the retainer 64 toward the outside in the radial direction. Here, since the first fall-out preventing portion 88 satisfies the condition described in the above section (2), the tapered roller 63 can be reliably stopped by the first fall-out preventing portion 88. This can result in reliably preventing the tapered roller 63, which is combined with the retainer 64 from the inside in the radial direction, from falling out of the retainer 64 toward the outside in the radial direction.

While being housed in the pocket 84 of the retainer 64, the tapered roller 63 remains in contact with the inclined surface 88a of the first fall-out preventing portion 88 and also with the inclined surface 89a of the second fall-out preventing portion 89. Accordingly, the second fall-out preventing portion 89 also prevents the tapered roller 63 from falling out of the retainer 64 toward the inside in the radial direction. Having the above-described configuration, the retainer 64 can keep the orientation of the tapered roller 63. In other words, the retainer 64 can retain the tapered roller 63.

After this, the retainer 64 having the tapered rollers 63 combined is housed between the outer and inner races 61A and 62A. This completes the assembling of the first main bearing 6A.

Subsequently, a lubricating oil is poured inside the first main bearing 6A. Here, the first and second fall-out preventing portions 88 are positioned closer to the small-diameter ring 82 than to the large-diameter ring 81. This leaves, on the large-diameter ring 81 side, a fully open space S (see Fig. 2) between the large-diameter ring 81 and the small-diameter ring 82. The space S can establish communication between the outside and the inside of the first main bearing 6A in the radial direction. This can improve the oil flowability, thereby allowing the lubricating oil to easily and sufficiently reach the respective parts of the first main bearing 6A.

<How Speed Reducer Works>

The following now describes how the speed reducer 1 works. The rotational force provided from the external motor (not shown) is transmitted to the crankshafts 4 via the input gear 18 and spur gear 17. As the crankshafts 4 rotate, the first and second oscillating gears 5A and 5B, which support the crankshafts 4, oscillatorily rotate. This results in the carrier 3 rotating on the axis of rotation A1 at the reduced speed when compared with the rotation produced by the external motor. Via the main bearings 6A and 6B, the carrier 3 rotates relative to the outer tube 2.

If the outer tube 2 is fixedly attached to an external device or the like, which is not shown, the carrier 3 serves as an output unit for outputting the rotation input into the speed reducer 1 (the rotation produced by the external motor). This means that a not-shown drive member can be driven by being attached to the carrier 3. On the other hand, if the carrier 3 is fixedly attached to an external device or the like, which is not shown, the outer tube 2 serves as an output unit for outputting the rotation input into the speed reducer 1 (the rotation produced by the external motor). This means that a not-shown drive member can be driven by being attached to the outer tube 2. As described, the outer tube 2 and carrier 3 can both serve as an output unit (first and second output units recited in the claims).

In the above-described embodiment, the retainer 64 of the main bearings 6A and 6B has the two types of fall-out preventing portions 88 and 89. The first fall-out preventing portion 88 can prevent the tapered roller 63 from falling out of the retainer 64 toward the outside in the radial direction. The second fall-out preventing portion 89 can prevent the tapered roller 63 from falling out of the retainer 64 toward the inside in the radial direction. Consequently, the main bearings 6A and 6B can be assembled in an improved manner. For example, if the retainer 64 has only one type of fall-out preventing portions, the tapered rollers 63 could fall out of the retainer 64 toward the outside or inside in the radial direction. This will obstruct the assembling of the main bearings 6A and 6B.

Each column 83 has the two types of fall-out preventing portions 88 and 89 positioned closer to the small-diameter ring 82 than to the large-diameter ring 81. This leaves, on the large-diameter ring 81 side, the fully open space S (see Fig. 2) between the large-diameter ring 81 and the small-diameter ring 82. This can improve the flowability of the oil into the inside of the main bearings 6A and 6B. As a result, the main bearings 6A and 6B can achieve an extended product lifetime.

Since the two types of fall-out preventing portions 88 and 89 are positioned closer to the small-diameter ring 82 than to the large-diameter ring 81, the space S can be left on the large-diameter ring 81 side. The large-diameter ring 81 has a longer circumferential length than the small-diameter ring 82. As left on the large-diameter ring 81 side, the space S can have a larger opening area than when left on the small-diameter ring 82 side.

Due to their structural features, the tapered rollers 63, which are used as the rolling elements of the main bearings 6A and 6B, are arranged such that the small-diameter surface 63b faces the small-diameter ring 82 of the retainer 64. In other words, the small-diameter surface 63b of the tapered rollers 63 are positioned on the small-diameter ring 82 side, where the two types of fall-out preventing portions 88 and 89 are arranged. Thus, the rolling elements (tapered rollers 63) can be combined with the retainer 64 in a more facilitated manner than in a case where the portion of the tapered roller 63 including the large-diameter surface 63a is placed where the fall-out preventing portions 88 and 89 are provided.

The length L1 of the first fall-out preventing portion 88 is different from the length L2 of the second fall-out preventing portion 89. The tapered rollers 63 can be combined with the retainer 64 more easily as the tapered rollers 63 are combined with the retainer 64 from the side where the shorter fall-out preventing portion is provided. The different lengths L1 and L2 can result in a more reliable oil flow space (space S).

In addition, the lengths L1 and L2 satisfy the relation described in the above section (1). Therefore, the tapered rollers 63 can be combined with the retainer 64 from the inside in the radial direction in a smoother way. When the tapered rollers 63 are combined with the retainer 64 from the inside in the radial direction, the tapered rollers 63 may accidentally fall out of the retainer 64 toward the outside in the radial direction. This can be reliably prevented from happening since the length L1 of the first fall-out preventing portion 88 is greater than the length L2 of the second fall-out preventing portion 89.

The length L1 of the first fall-out preventing portion 88 satisfies the relation described in the above section (2). Accordingly, the inclined surface 88a of the first fall-out preventing portion 88 can reliably butt up against the tapered surface 63c of the tapered roller 63. When the tapered rollers 63 are assembled into the retainer 64 from the inside in the radial direction, the tapered rollers 63 may accidentally fall out of the retainer 64 toward the outside in the radial direction. This can be more reliably prevented from happening. The retainer 64 can thus reliably retain the tapered roller 63.

The thickness T1 of the large-diameter ring 81 in the radial direction and the thickness T2 indicating the distance between the outer surface 85 of the column 83 and the second flat surface 86c satisfies the relation described in the above section (6), i.e., the expression (1).

The large-diameter ring 81 is arranged at a distance and outside the outer peripheral surface 66a of the restriction wall 66 of the inner race 62A in the radial direction. In other words, the large-diameter ring 81 needs to be configured such that it can avoid interfering with the restriction wall 66. In addition, draft should be applied to the parts of the retainer 64, which is injection molded using the two molds 101 and 102. Considering these issues, the thickness T1 of the large-diameter ring 81 in the radial direction is preferably small. This is because the first mold 101 could be more easily removed from the retainer 64 if the large-diameter inner surface 81a is inclined with respect to the axis of roller A3 so that it can extend along the inclined inner surface 81c of the large-diameter ring 81. Another reason is that a small thickness T1 can help the large-diameter ring 81 avoiding the interference with the restriction wall 66.

A small thickness T1, however, would compromise the rigidity of the retainer 64. To address this issue, the relation described in the above section (6), i.e., the expression (1) is intentionally satisfied. This can allow the retainer 64 to achieve improved rigidity. To satisfy the relation described in the above section (6), i.e., the expression (1) and, at the same time, to allow the first mold 101 to be removed from the retainer 64 smoothly, the angle θ formed between the large-diameter inner surface 81a of the large-diameter ring 81 and the inclined inner surface 81c (see Fig. 7) is preferably 5° to 15°.

In order to make the retainer 64 from a resin, the two molds 101 and 102 are used, of which the first mold 101 can shape the fall-out preventing portions 88 and 89. In other words, the fall-out preventing portions 88 and 89 are positioned on one of the sides defined with respect to the parting line PL for the molds 101 and 102. Further stated differently, the method of manufacturing the retainer 64 uses only the first mold 101 to shape the fall-out preventing portions 88 and 89. Therefore, the accuracy of molding the fall-out preventing portions 88 and 89 solely depends on the first mold 101. If a change is made in the shape of the fall-out preventing portions 88 and 89, it is only the first mold 101 that needs to be changed. Accordingly, the present embodiment can reduce the manufacturing cost.

In the retainer 64, the step 87a of the first fall-out preventing portion 88 (the first side surface) is located on the same straight line as the inclined inner surface 81c of the large-diameter ring 81 (second side surface). In this way, the parting line PL for the molds 101 and 102 can extend along the step 87a, the inclined inner surface 81c and part of the outer surface 85 of the column 83 (the portion of the outer surface 85 that is positioned closer to the small-diameter ring 82 with respect to the step 87a). Since the parting line PL is configured in the above-described manner, the fall-out preventing portions 88 and 89 can be made only with the first mold 101.

The speed reducer 1 can be assembled in an improved manner as constituted by the above-described main bearings 6A and 6B. Additionally, the speed reducer 1 can achieve an extended product lifetime.

The embodiments described herein are not intended to necessarily limit the present invention to any specific embodiments. Various modifications can be made to these embodiments without departing from the true scope and spirit of the present invention.

For example, according to the above-described embodiment, each column 83 has the two fall-out preventing portions 88 and 89 positioned closer to the small-diameter ring 82 than to the large-diameter ring 81. The present embodiment, however, is not limited to such. Each column 83 may have the two fall-out preventing portions 88 and 89 positioned closer to the large-diameter ring 81 than to the small-diameter ring 82. Even in this case, an open space can be left between the large- and small-diameter rings 81 and 82.

According to the above-described embodiment, the length L1 of the first fall-out preventing portion 88 and the length L2 of the second fall-out preventing portion 89 satisfy the relation described in the above section (1). The present embodiment, however, is not limited to such, and the lengths L1 and L2 just need to be different from each other. Consequently, the main bearings 6A and 6B can achieve improved oil flowability.

In the above-described embodiment, the main bearings 6A and 6B are tapered roller bearings, where the tapered rollers 63 are used as the rolling elements. The present embodiment, however, is not limited to such, and the above-described retainer 64 can be applicable to various types of bearings. For example, the above-described retainer 64 can be applicable to cages for retaining as rolling elements cylindrical or spherical rollers.

According to the above-described embodiment, the parts of the retainer 64 have dimensions determined to satisfy the relations described in the sections (1) to (8). The present embodiment, however, is not limited to such, and the parts of the retainer 64 do not need to have dimensions satisfying the relations described in the sections (1) to (8). The retainer 64 is at least required to have the two types of fall-out preventing portions 88 and 89, which are positioned closer to one of the large-diameter ring 81 or the small-diameter ring 82 than to the other.

According to the above-described embodiment, the columns 83 each have the outer and inner surfaces 85 and 86. According to the above description, the inner surface 86 is divided into the first flat surface 86a, inclined surface 86b and second flat surface 86c. According to the foregoing description, the parting line PL for the two molds 101 and 102 extends along the axially outer end surface 81e, large-diameter inner surface 81a, and inclined inner surface 81c of the large-diameter ring 81, the step 87a and outer surface 85 of each column 83, the inclined outer surface 82d and axially inner end surface 82b of the small-diameter ring 82. The present embodiment, however, is not limited to such, and the columns 83 can be shaped in any manners. The parting line PL can be set depending on the shape of the columns 83. Note that, however, the parting line PL is preferably determined such that the fall-out preventing portions 88 and 89 can be made using one of the two molds 101 and 102.

In the above-described embodiment, the speed reducer 1 is an eccentric oscillation speed reducer including the crankshafts 4, oscillating gears 5A and 5B, and the like. In the above-described embodiment, the speed reducer 1 has the main bearings 6A and 6B. The present embodiment, however, is not limited to such, and the main bearings 6A and 6B can be applicable to various types of speed reducers 1. The main bearings 6A and 6B can be applicable to any other devices than the speed reducer 1. For example, the main bearings 6A and 6B can be applicable not only to devices for reducing input rotation (speed reducers) but also to devices for increasing input rotation.

The foregoing embodiments disclosed herein describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

## LIST OF REFERENCE NUMBERS

[0108]

| | |
|---|---|
| 1 | speed reducer (transmission) |
| 2 | outer tube (first output portion, second output portion) |
| 3 | carrier (first output portion, second output portion) |
| 6A | first main bearing (bearing) |
| 6B | second main bearing (bearing) |
| 10 | reduction unit (speed changing unit) |
| 18 | input gear (input portion) |
| 61A, 61B | outer race |
| 62A, 62B | inner race |
| 63 | tapered roller (rolling element) |
| 64 | cage |
| 81 | large-diameter ring |
| 81c | inclined inner surface (second side surface) |
| 87a | step (first side surface) |
| 82 | small-diameter ring |
| 83 | column |
| 85 | outer surface |
| 86 | inner surface |
| 86a | first flat surface |
| 86b | inclined surface |
| 86c | second flat surface |
| 88 | first fall-out preventing portion |
| 89 | second fall-out preventing portion |
| 101 | first mold (mold) |
| 102 | second mold (mold) |
| L1 | length (length of first fall-out preventing portion) |
| L2 | length (length of second fall-out preventing portion) |
| PL | parting line |
| T1, T2 | thickness |

## Claims

1. A retainer (64) for retaining a plurality of rolling elements (63) of a bearing (6A, 6B), the retainer (64) comprising:

   an annular large-diameter ring (81);
   an annular small-diameter ring (82) having a smaller outer diameter than the large-diameter ring (81); and
   a plurality of columns (83) extending in a radial direction of the large- and small-diameter rings (81 and 82) to connect the large- and small-diameter rings (81 and 82),
   wherein the columns (83) are arranged at equal intervals in a circumferential direction and between the rolling elements (63), and
   wherein the columns (83) each have:

   a first fall-out preventing portion (88) for preventing the rolling elements (63) from falling out of the large- and small-diameter rings (81 and 82) toward a first direction; and
   a second fall-out preventing portion (89) for preventing the rolling elements (63) from falling out of the large- and small-diameter rings (81 and 82) toward a second direction opposite to the first direction, and
   wherein the first and second fall-out preventing portions (88 and 89) are positioned closer to one of the large-diameter ring (81) or the small-diameter ring (82) than to another of the large-diameter ring (81) or the small-diameter ring (82).

2. The retainer (64) of claim 1, wherein the first and second fall-out preventing portions (88 and 89) are positioned closer to the small-diameter ring (82) than to the large-diameter ring (81).

3. The retainer (64) of claim 2, wherein the rolling elements (63) include tapered rollers.

4. The retainer (64) of claim 3, wherein a length (L1) of the first fall-out preventing portion (88) in a direction orthogonal to the first and second directions is different from a length (L2) of the second fall-out preventing portion (89) in a direction orthogonal to the first and second directions.

5. The retainer (64) of claim 4,

   wherein the first fall-out preventing portion (88) is positioned outside in the radial direction,
   wherein the second fall-out preventing portion (89) is positioned inside in the radial direction,
   wherein the length (L2) of the second fall-out preventing portion (89) is measured in a direction in which an axis (A3) of the tapered rollers (63) extends,
   wherein the length (L1) of the first fall-out preventing portion (88) is measured in the direction in which the axis (A3) of the tapered rollers (63) extends, and
   wherein the length (L2) of the second fall-out preventing portion (89) is less than the length (L1) of the first fall-out preventing portion (88).

6. The retainer (64) of claim 5, wherein the length (L1) of the first fall-out preventing portion (88) is equal to or greater than 50% of a length (L3) indicating a distance between the large- and small-diameter rings (81 and 82).

7. The retainer (64) of claim 5 or 6,
   wherein the columns (83) each have:

an outer surface (85) located outside in the radial direction; and

an inner surface (86) located inside in the radial direction,

wherein the outer surface (85) is a flat surface extending from the small-diameter ring (82) to the large-diameter ring (81),

wherein the inner surface (86) has:

a first flat surface (86a) extending from the small-diameter ring (82) toward the large-diameter ring (81) in a direction in which the outer surface (85) extends;

an inclined surface (86b) extending obliquely from an end of the first flat surface (86a) facing the large-diameter ring (81) toward the outer surface (85); and

a second flat surface (86c) extending from an end of the inclined surface (86b) facing the large-diameter ring (81) to the large-diameter ring (81) in the direction in which the outer surface (85) extends, and

wherein a relation of $T1 \geq T2$ is satisfied, where T1 represents a thickness in the radial direction of an end of the large-diameter ring (81) that faces away from the small-diameter ring (82) and T2 represents a thickness indicating a distance between the outer surface (85) and the second flat surface (86c).

8. The retainer (64) of claim 7,

wherein the large-diameter ring (81), the small-diameter ring (82) and the columns (83) are made from a resin and shaped by two separable molds (101 and 102), and

wherein the first and second fall-out preventing portions (88 and 89) are both located on one of sides defined with respect to a parting line (PL) for the two separable molds (101 and 102).

9. The retainer (64) of claim 8,

wherein a first side surface (87a) of the first fall-out preventing portion (88) that faces the large-diameter ring (81) is located on a same straight line as a second side surface (81c) of the large-diameter ring (81) that faces inside in the radial direction, and

wherein the first side surface (87a), the second side surface (81c) and a portion of the outer surface (85) of the each column (83) that is positioned on the small-diameter ring (82) side with respect to the first side surface (87a) are arranged along the parting line (PL).

10. A bearing (6A, 6B) comprising:

an outer race (61A, 61B);

an inner race (62A, 62B) located inside the outer race (61A, 61B) in a radial direction;

a plurality of rolling elements (63) rollably housed between the inner race (62A, 62B) and the outer race (61A, 61B); and

a retainer (64) retaining the plurality of rolling elements (63),

wherein the retainer (64) includes:

an annular large-diameter ring (81);

an annular small-diameter ring (82) having a smaller outer diameter than the large-diameter ring (81); and

a plurality of columns (83) connecting the large- and small-diameter rings (81 and 82), the columns (83) being arranged at equal intervals in a circumferential direction and between the rolling elements (63), and

wherein the columns (83) each have:

a first fall-out preventing portion (88) for preventing the rolling elements (63) from falling out of the large- and small-diameter rings (81 and 82) toward a first direction; and

a second fall-out preventing portion (89) for preventing the rolling elements (63) from falling out of the large- and small-diameter rings (81 and 82) toward a second direction opposite to the first direction, and

wherein the first and second fall-out preventing portions (88 and 89) are positioned closer to one of the large-diameter ring (81) or the small-diameter ring (82) than to another of the large-diameter ring (81) or the small-diameter ring (82).

11. A transmission (1) comprising:

an input part (18) for receiving an input rotational force;

a speed changing unit (10) for changing a speed of rotation of the input part (18);

a first output part and a second output part (2 and 3) to which the rotation of the input part (18) is transmitted via the speed changing unit (10), the first and second output parts (2 and 3) being configured to rotate relative to each other; and

a bearing (6A, 6B) supporting the first and second output parts (2 and 3) such that the first and second output parts (2 and 3) are rotatable relative to each other,

wherein the bearing (6A, 6B) includes:

an outer race (61A, 61B);

an inner race (62A, 62B) located inside the outer race (61A, 61B) in a radial direction; a plurality of rolling elements (63) rollably housed between the inner race (62A, 62B) and the outer race (61A, 61B); and a retainer (64) retaining the plurality of rolling elements (63), wherein the retainer (64) includes:

an annular large-diameter ring (81); an annular small-diameter ring (82) having a smaller outer diameter than the large-diameter ring (81); and a plurality of columns (83) connecting the large- and small-diameter rings (81 and 82), the columns (83) being arranged at equal intervals in a circumferential direction and between the rolling elements (63), wherein the columns (83) each have:

a first fall-out preventing portion (88) for preventing the rolling elements (63) from falling out of the large- and small-diameter rings (81 and 82) toward a first direction; and a second fall-out preventing portion (89) for preventing the rolling elements (63) from falling out of the large- and small-diameter rings (81 and 82) toward a second direction opposite to the first direction, and wherein the first and second fall-out preventing portions (88 and 89) are positioned closer to one of the large-diameter ring (81) or the small-diameter ring (82) than to another of the large-diameter ring (81) or the small-diameter ring (82).

12. A method of manufacturing a retainer (64) for retaining a plurality of rolling elements (63) of a bearing (6A, 6B), the retainer (64) having a first fall-out preventing portion (88) for preventing the rolling elements (63) from falling out of the retainer (64) toward a first direction and a second fall-out preventing portion (89) for preventing the rolling elements (63) from falling out of the retainer (64) toward a second direction opposite to the first direction, the first fall-out preventing portion being positioned on one of sides defined relative to the rolling elements and the second fall-out preventing portion being positioned on said one of sides defined relative to the rolling elements, the method comprising steps of:

making the retainer (64) from a resin by means of injection molding using two molds (101 and 102); and separating the two molds (101 and 102) from each other at a parting line (PL), wherein one of the two molds (101 and 102) is used to make the first and second fall-out preventing portions (88 and 89).

Fig. 1

Fig. 2

Fig. 3

Fig. 4

Inside In Axial Direction ←——→ Outside In Axial Direction

Fig. 5

Inside In Radial Direction

Outside In Radial Direction

Fig. 6

Inside In Radial Direction

Outside In Radial Direction

Fig. 7

Outside In Radial Direction

Inside In Axial Direction ←→ Outside In Axial Direction

Inside In Radial Direction

EP 4 455 501 A1

Europäisches
Patentamt

European
Patent Office

Office européen
des brevets

# EUROPEAN SEARCH REPORT

**Application Number**

EP 24 16 4154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/129709 A1 (NTN TOYO BEARING CO LTD [JP]) 3 September 2015 (2015-09-03) | 1-6, 10-12 | INV.<br>F16C19/36<br>F16C33/46 |
| A | * figures 13a, 13b * | 7-9 | |
| | ----- | | |
| X | WO 2021/246209 A1 (NTN TOYO BEARING CO LTD [JP]) 9 December 2021 (2021-12-09) | 1-6, 10-12 | |
| Y | * figure 7 * | 7-9 | |
| | ----- | | |
| Y | WO 2019/065768 A1 (NTN TOYO BEARING CO LTD [JP]) 4 April 2019 (2019-04-04) | 7-9 | |
| A | * figures 3,6 * | 1-6, 10-12 | |
| | ----- | | |
| X | US 2016/040716 A1 (KOGANEI MAKOTO [JP] ET AL) 11 February 2016 (2016-02-11) | 12 | |
| A | * paragraphs [0001], [0132], [0133]; figures 2,3,5,8a * | 1-11 | |
| | ----- | | |

TECHNICAL FIELDS
SEARCHED (IPC)

F16C

The present search report has been drawn up for all claims

| Place of search | Date of completion of the search | Examiner |
|---|---|---|
| The Hague | 9 September 2024 | Kovács, Endre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 4154

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | | | Publication date | Patent family member(s) | | | Publication date |
|---|---|---|---|---|---|---|---|
| WO 2015129709 | A1 | | 03-09-2015 | NONE | | | |
| WO 2021246209 | A1 | | 09-12-2021 | CN | 115667739 | A | 31-01-2023 |
| | | | | JP | 7495816 | B2 | 05-06-2024 |
| | | | | JP | 2021188719 | A | 13-12-2021 |
| | | | | WO | 2021246209 | A1 | 09-12-2021 |
| WO 2019065768 | A1 | | 04-04-2019 | CN | 111133210 | A | 08-05-2020 |
| | | | | JP | 6875971 | B2 | 26-05-2021 |
| | | | | JP | 2019065880 | A | 25-04-2019 |
| | | | | WO | 2019065768 | A1 | 04-04-2019 |
| US 2016040716 | A1 | | 11-02-2016 | CN | 105143697 | A | 09-12-2015 |
| | | | | CN | 107246442 | A | 13-10-2017 |
| | | | | EP | 2982878 | A1 | 10-02-2016 |
| | | | | US | 2016040716 | A1 | 11-02-2016 |
| | | | | US | 2017227052 | A1 | 10-08-2017 |
| | | | | WO | 2014163177 | A1 | 09-10-2014 |

EPO FORM P0459

For more details about this annex : see Official Journal of the European Patent Office, No. 12/82

**EP 4 455 501 A1**

**Patent documents cited in the description**

- JP 2014202284 A